(19) Europäisches Patentamt / European Patent Office / Office européen des brevets

(11) **EP 4 453 509 B1**

(12) **EUROPEAN PATENT SPECIFICATION**

(45) Date of publication and mention
of the grant of the patent:
**18.03.2026  Bulletin 2026/12**

(21) Application number: **22854568.7**

(22) Date of filing: **22.12.2022**

(51) International Patent Classification (IPC):
**G01C 21/10** $^{(2006.01)}$    **G01C 21/20** $^{(2006.01)}$
**H04S 7/00** $^{(2006.01)}$

(52) Cooperative Patent Classification (CPC):
**G01C 21/20; G01C 21/10; H04S 7/304;**
**H04R 1/1016**

(86) International application number:
**PCT/US2022/053826**

(87) International publication number:
**WO 2023/122282 (29.06.2023 Gazette 2023/26)**

(54) **DETERMINATION OF MOVEMENT DIRECTION**

BESTIMMUNG DER BEWEGUNGSRICHTUNG

DÉTERMINATION DE DIRECTION DE DÉPLACEMENT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **23.12.2021  US 202163293444 P**
**20.09.2022  US 202263376347 P**

(43) Date of publication of application:
**30.10.2024  Bulletin 2024/44**

(73) Proprietor: **Dolby Laboratories Licensing**
**Corporation**
**San Francisco, CA 94103 (US)**

(72) Inventor: **MCGRATH, David S.**
**San Francisco, California 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
**CN-A- 113 825 055      US-A1- 2003 191 582**
**US-A1- 2015 088 408      US-A1- 2021 400 418**

Description

## CROSS-REFERENCE TO RELATED APPLICATIONS

This application claims priority to U.S. Provisional Application No. 63/293,444 filed December 23, 2021, and U.S. Provisional Application No. 63/376,347 filed on September 20, 2022.

## TECHNICAL FIELD

This disclosure pertains to systems, methods, and media for determination of movement direction.

## BACKGROUND

Determining user movement direction may be useful. However, determining user movement direction may be difficult, for example, due to artifacts in measured sensor data due to the user's movement, due to confounding sensor data due to a user looking around while moving, and the like.

US 2003/191582 A1 describes a navigation apparatus for a pedestrian comprising a display unit for displaying a map and a main body within which an acceleration sensor and an azimuth sensor are arranged. The apparatus further comprises a walking direction calculation unit which calculates the walking direction of a pedestrian with reference to the azimuth of the navigation apparatus in accordance with the acceleration components detected by the acceleration sensor. This calculation is based on an analysis of graphs plotted using experimental data showing the relationship between the acceleration in the horizontal direction and that in the vertical direction during walking motion of a pedestrian.

US 2015/088408 describes a technique for estimating a direction of travel of a pedestrian using a portable terminal device. The terminal device includes an acceleration sensor, a gyro sensor and a magnetic sensor. A peak detection portion acquires peak information based on the acceleration information acquired by the acceleration sensor, information indicating the current posture of the terminal device, and kicking leg information.

CN 113 825 055 A discloses that sound from headphones is emitted such as appearing from a source in front of the user, where the user is moving. Audio content is rendered to be presented by headphones according to the user's movement direction so as to have the perception that it is centred with the direction.

## NOTATION AND NOMENCLATURE

Throughout this disclosure, including in the claims, the terms "speaker," "loudspeaker" and "audio reproduction transducer" are used synonymously to denote any sound-emitting transducer (or set of transducers). A typical set of headphones includes two speakers. A speaker may be implemented to include multiple transducers (e.g., a woofer and a tweeter), which may be driven by a single, common speaker feed or multiple speaker feeds. In some examples, the speaker feed(s) may undergo different processing in different circuitry branches coupled to the different transducers.

Throughout this disclosure, including in the claims, the expression performing an operation "on" a signal or data (e.g., filtering, scaling, transforming, or applying gain to, the signal or data) is used in a broad sense to denote performing the operation directly on the signal or data, or on a processed version of the signal or data (e.g., on a version of the signal that has undergone preliminary filtering or pre-processing prior to performance of the operation thereon).

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

## SUMMARY

The present invention is directed to a method for determining movement direction and rendering audio based on it according to claim 1 and to a corresponding apparatus according to claim 14 and to a corresponding non-transitory media according to claim 15.

Methods, systems, and media for determining user movement direction are provided. In some embodiments, the method may involve obtaining, using a control system, user acceleration data associated with a user. The method may involve determining, using the control system, a movement period associated with a movement activity of the user using the user acceleration data, wherein the movement period indicates a duration between two sequential movements by the user. The method may involve determining, using the control system, a movement direction corresponding to the movement activity using the user acceleration data based on a direction of acceleration orthogonal to the movement direction in which at least a portion of the user acceleration data is anti-periodic over a period of time corresponding to the movement period.

In some examples, the at least the portion of the user acceleration data is anti-periodic over the period of time corresponding to the movement period such that a cross-correlation of the at least the portion of the user acceleration data with a version of the at least the portion of the user acceleration data delayed by the movement period is negative.

In some examples, the at least the portion of the user acceleration data that is anti-periodic includes a local maximum and a local minimum occurring after a subsequent time interval corresponding with the movement activity.

In some examples, the movement activity comprises walking or running, and wherein the movement direction comprises a direction the user is walking or running.

In some examples, the method further involves transforming the user acceleration data from a user-centered coordinate frame to a fixed coordinate frame, to produce transformed user acceleration data, wherein the movement period is determined using the transformed user acceleration data. In some examples, transforming the user acceleration data comprises using user head orientation data obtained from one or more gyroscopes. In some examples, the head orientation data is used to identify the movement direction.

In some examples, determining the movement period comprises using data associated with a vertical component of the user acceleration data. In some examples, determining the movement period further comprises: providing the data associated with the vertical component of the user acceleration data to a plurality of narrowband filters, each narrowband filter of the plurality of narrowband filters associated with a different frequency; and generating a prediction of a movement frequency based on outputs of the plurality of narrowband filters, wherein the prediction of the movement frequency is used to determine the movement period. In some examples, using the prediction of the movement frequency to determine the movement period comprises identifying a period of an output of a selected narrowband filter of the plurality of narrowband filters, wherein the selected narrowband filter of the plurality of narrowband filters generates a largest output signal.

In some examples, the at least a portion of the user acceleration data that is anti-periodic over the period of time corresponding to the movement period comprises one or more horizontal components of the user acceleration data. In some examples, identifying the direction of acceleration orthogonal to the movement direction comprises determining a cross-covariance vector corresponding to the data associated with the one or more horizontal components of the user acceleration data with a version of the data associated with the one or more horizontal components of the user acceleration data delayed by the movement period. In some examples, the cross-covariance vector is determined by: determining, for each of a plurality of sample times, an outer-product vector from two or more horizontal components of the user acceleration data and two or more horizontal components of the user acceleration data delayed by the movement period; and combining two or more of the outer-product vectors from two or more of the plurality of sample times to determine the cross-covariance vector. In some examples, the two or more of the outer-product vectors are combined using a weighting, and wherein outer-product vectors associated with more recent sample times are weighted more heavily than outer-product vectors associated with less recent sample times. In some examples, the weighting comprises an exponential decay function. In some examples, the method further involves applying a bandpass filter to the one or more horizontal components of the user acceleration data prior to identifying the direction of acceleration orthogonal to the movement direction.

In some examples, the movement direction is determined by: determining an intermediate angle corresponding to twice the angle associated with the movement direction; and determining the angle associated with the movement direction based on the intermediate angle. In some examples, determining the angle associated with the movement direction based on the intermediate angle comprises: halving the intermediate angle to determine a candidate movement direction; and selecting the angle associated with the movement direction as the candidate movement direction or 180 degrees from the candidate movement direction based on head orientation data. In some examples, determining the angle associated with the movement direction based on the intermediate angle comprises: determining a difference between the intermediate angle and an angle associated with an orientation of a head of the user; and determining the angle associated with the movement direction based on the difference.

In some examples, the user acceleration data is obtained from one or more accelerometers disposed in or on a user device configured to be carried by or worn by the user. In some examples, the user device comprises headphones. In some examples, the method further involves rendering audio content to be presented by the headphones based on the identified movement direction. In some examples, the audio content is rendered to have a spatial perception of being centered with the identified movement direction.

Some or all of the operations, functions and/or methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. Accordingly, some innovative aspects of the subject matter described in this disclosure can be implemented via one or more non-transitory media having software stored thereon.

At least some aspects of the present disclosure may be implemented via an apparatus. For example, one or more devices may be capable of performing, at least in part, the methods disclosed herein. In some implementations, an apparatus is, or includes, an audio processing system having an interface system and a control system. The control system may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

## BRIEF DESCRIPTION OF THE DRAWINGS

Figure 1 is a diagram illustrating axes and vectors associated with movement in accordance with some embodiments.

Figure 2 is a plot illustrating vertical and lateral components of acceleration in accordance with some embodiments.

Figure 3 is a flowchart of an example process for determining movement direction in accordance with some embodiments.

Figure 4 is a flowchart of an example process for transforming acceleration data from a user-centered coordinate frame to a fixed coordinate frame in accordance with some embodiments.

Figure 5 is a flowchart of an example process for determining a movement period in accordance with some embodiments.

Figure 6 is an example plot of a vertical acceleration component over a period of time in accordance with some embodiments.

Figure 7 illustrates gains of various bandpass filters that may be applied to vertical acceleration data in accordance with some embodiments.

Figure 8 illustrates outputs of various bandpass filters in accordance with some embodiments.

Figure 9 is a plot of an output of the band pass filter of Figure 8 with the highest amplitude.

Figure 10 is a flowchart of an example process to determine a cross-covariance vector indicative of a direction orthogonal to a movement direction in accordance with some embodiments.

Figure 11 is an example of a bandpass filter that may be applied to acceleration components in accordance with some embodiments.

Figure 12 shows a block diagram that illustrates examples of components of an apparatus capable of implementing various aspects of this disclosure.

Like reference numbers and designations in the various drawings indicate like elements.

## DETAILED DESCRIPTION OF EMBODIMENTS

It may be useful to determine a movement direction of a user engaged in a movement activity, such as walking or running. For example, the movement direction may be useful for presenting content in a manner that is dependent on the movement direction. This content may include visual content (e.g., in an instance in which the user is viewing content presented by a virtual reality (VR) or augmented reality (AR) headset, or the like), audio content, etc. According to the invention the presented content includes audio content. As a more particular example, certain audio content (e.g., music, a podcast, a radio show, a movie soundtrack, etc.) may involve a spatial component such that the audio content is to be rendered (e.g., by headphones, speakers, etc.) in a manner in which components of the audio content are perceived to be at different spatial locations with respect to the listener. In an instance in which a user is in motion, it may be difficult to render the audio content in a manner that is faithful to the creator's intent without knowledge of the movement direction of the user. By way of example, in an instance in which a component of the audio content (e.g., a speaker, the main component of music, etc.) is to be positioned in a manner that is centered with respect to the user, it may be difficult to correctly center the audio component while the user is in motion (e.g., walking, running, etc.) without knowledge of the movement direction. Accordingly, determining movement direction of a user in motion may be useful.

However, it can be difficult to accurately determine movement direction. For example, some conventional techniques may make use of motion sensors, which may include accelerometers, gyroscopes, and/or magnetometers, on a device that is worn by the user, e.g., on a head of the user. By way of example, such motion sensors may be disposed in or on headphones, earbuds, glasses, AR/VR headsets, etc. that are worn on a head of the user. In such instances, if a user is in motion (e.g., walking, running, or the like) in a particular movement direction, while looking around in one or more directions other than the movement direction, estimates of the movement direction may be rendered inaccurate due to motion sensor information that is collected with respect to the user's head, which is moving in directions other than the movement direction. In the case in which audio content is to be rendered with respect to the center of the user (e.g., the user's torso), this may cause artifacts in the spatial rendering, for example, as the user looks around while walking.

Disclosed herein are systems, methods, and media for determining movement direction. The techniques described herein allow the movement direction to be determined irrespective of a head orientation, such that the movement direction of a user in motion may be accurately determined, even in instances in which the head of the user is directed in a direction other than the movement direction. The techniques may be implemented regardless of where the motions sensors (e.g., accelerometers, gyroscopes, and/or magnetometers) are disposed, e.g., in or on a head-worn device, in or on a device carried by the user in their pocket, etc.

In some implementations, the movement direction may be determined by obtaining user acceleration data of a user (e.g., a user engaging in a movement activity). A movement period may be determined based on the user acceleration data, where the movement period indicates a time duration between two sequential movements of the user. By way of example, in an instance in which the movement activity being performed by the user is walking or running, the movement period may correspond to the time duration between two sequential steps the user takes while walking or running. The movement direction may then be determined based on a direction of acceleration that is orthogonal to the movement direction, where the orthogonal direction corresponds to a direction of acceleration over which at least a portion of the user acceleration data is anti-periodic over the movement direction. It should be noted that, as used herein, a "direction" generally refers to a vector associated with angles corresponding to axes of a given coordinate frame.

By way of example, in an instance in which the movement activity is walking or running, a vertical component of acceleration (which may correspond to, e.g., a head or other body part of the user moving up and down) may be substantially periodic with respect to the movement period. However, there may be a horizontal component of acceleration, which may substantially correspond to lateral motion of the user's head to the left and right during the movement activity, that is substantially anti-periodic with respect to the movement period. In other words, while the vertical component of acceleration may undergo a full cycle over the movement period, the horizontal component of acceleration may undergo only a half cycle (e.g., corresponding to head movement to the left or right) over the movement period. It should be noted that, as used herein, the term "anti-periodic" may be understood to mean that a cross-correlation of a signal with a signal delayed by a determined movement period is negative. In other words, the movement direction may be considered to be either the direction with the maximum amount of periodic acceleration, or, put another way, the direction orthogonal to the direction with the maximum amount of anti-periodic acceleration. Additionally or alternatively, "anti-periodic" may be understood to mean that both a local maximum and a local minimum (e.g., corresponding to head movement to the left and right, respectively) occur within a time interval corresponding to the movement period.

It should be noted that, although the movement activity is generally described herein with examples relating to walking or running. any suitable movement activity that includes periodic body motion may be considered. Other examples of movement activity include skipping, jogging, cycling, climbing, skating, cross-country skiing, or the like. Additionally, it should be noted that although the techniques described herein generally describe vertical components of acceleration as being periodic with respect to a given movement period, and horizontal components of acceleration as being anti-periodic with respect to the movement period, in some cases, this may be reversed. For example, in some instances, the horizontal components of acceleration may be periodic with respect to a movement period depending on the movement activity being considered.

Additionally, it should be noted that, in some implementations, subsequent to determining a movement direction, content may be rendered based on the movement direction. For example, audio content may be rendered such that at least a portion of the audio content is perceived as being positioned substantially in alignment with an estimated orientation of the user's torse torso while the user is moving in the movement direction. In some embodiments, the rendered audio content may be played back via, e.g., headphones, speakers, etc.

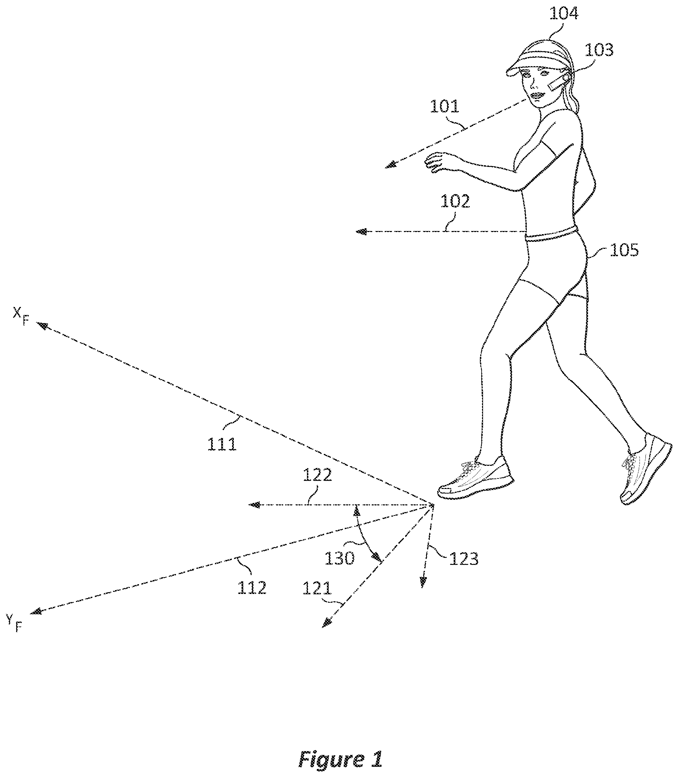

Figure 1 is a diagram illustrating various axes and vectors associated with an example use movement. As illustrated, subject 105 is walking in direction 102. In some implementations, it should be noted that a subject may be wearing a device that has one or more sensors configured for detecting motion, orientation, acceleration in various axes, etc. For example, subject 105 is wearing a head-mounted device, which includes a head-motion tracker 103. Head-motion tracker 103 may detect the orientation of the subject's head 104 relative to a stable frame of reference formed by the coordinate systems $(X_F, Y_F, Z_F)$, where the $X_F$ axis 111 and the $Y_F$ axis 112 define a horizontal stable reference frame, and the $Z_F$ axis (not shown) points up.

In the example shown in Figure 1, subject 105 has turned their head 104 to face in looking direction 101, e.g., to the left side of walking direction 102. The walking direction 102 is shown as projected axis 122, which is projected onto the horizontal stable reference frame. Looking direction 101 is shown as projected axis 121, which is projected onto the horizontal stable reference frame.

The angle $\alpha$ is the angle 130 between axis 121 and axis 122 and represents a difference between the direction $(\alpha_{look})$ the subject is looking relative to the direction $(\alpha_{move})$ the subject is walking. Direction 123 represents the direction orthogonal to walking direction 102.

Angle $\alpha$ may vary over time, even as the subject's movement direction remains constant, for example, due to the subject looking around while walking in a near-constant direction. In some implementations, the techniques described herein may effectively determine $\alpha$, and accordingly, a movement direction that is unaffected by the looking direction of the subject. Because acceleration data may be collected using one or more accelerometers disposed in or on a head-mounted device (e.g., a heads-up display, headphones, etc.), acceleration data may typically include acceleration artifacts associated with the subject's head movement. Accordingly, the techniques described herein may allow for a movement direction to be identified irrespective of looking direction.

In some implementations, a movement direction may be identified based on user acceleration data. For example, the user acceleration data may include multiple components, such as a vertical component (e.g., corresponding to movement in the up and down direction), a forward component (e.g., corresponding to movement in the front-back direction), and/or a lateral component (e.g., corresponding to movement in the left-right direction). It should be noted that, in some cases, acceleration data with respect to a first component may be periodic with respect to a movement period that defines a time duration between two sequential movements (e.g., a step period that defines a time during two sequential steps). For example, the acceleration data associated with the vertical component (e.g., the up and down direction) may be periodic with respect to the movement period as a user's head moves up and down while walking or running. In some cases, acceleration data with respect to a second component may be anti-periodic with respect to the movement period. For example, the acceleration data associated with the lateral component (e.g., corresponding to movement in the left-right direction) may be anti-periodic with respect to the movement period.

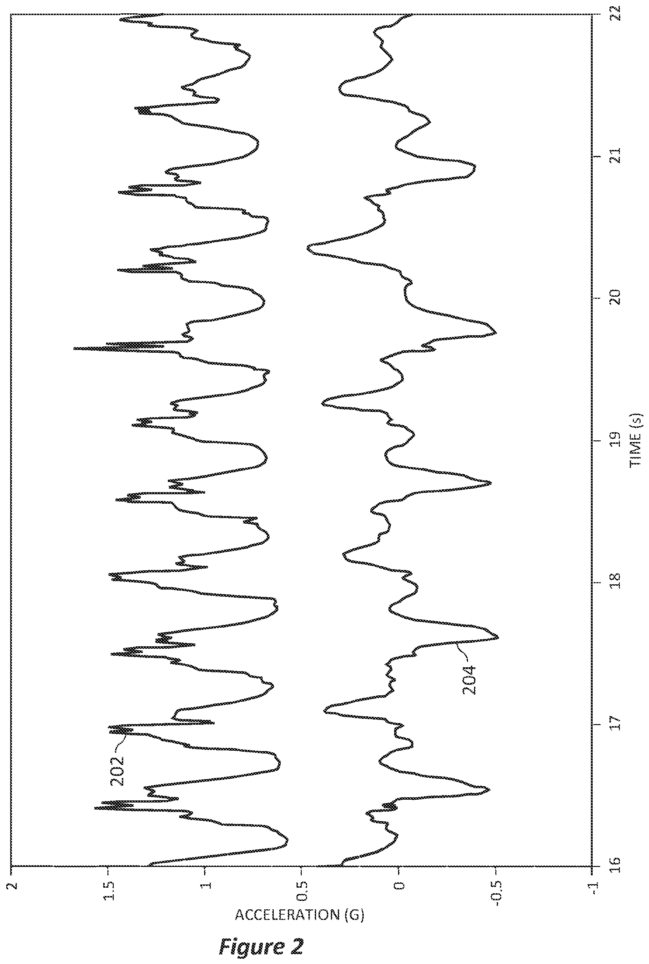

Figure 2 illustrates a plot of acceleration data associated with a vertical component and associated with a lateral component obtained during a walking activity. As illustrated, curve 202 represents user acceleration data associated with the vertical component, or with the up-down direction (e.g., the $Z_F$ axis of the coordinate system shown in and described above in connection with Figure 1). Note that curve 202 is periodic with a period corresponding to a movement period (e.g., a time between two sequential steps). Curve 204 illustrates user acceleration data associated with the lateral (e.g., left-right direction) component. Note that curve 204 is anti-periodic with respect to the movement period. In particular, note that if curve 204 is delayed by the movement period (e.g., the period over which curve 202 is periodic), a positive peak in curve 204 will have a corresponding negative peak in the delayed version of curve 204 (and vice versa), where a positive peak represents the user's head shifting left and the negative peak represents the user's head shifting right during a normal walking pattern.

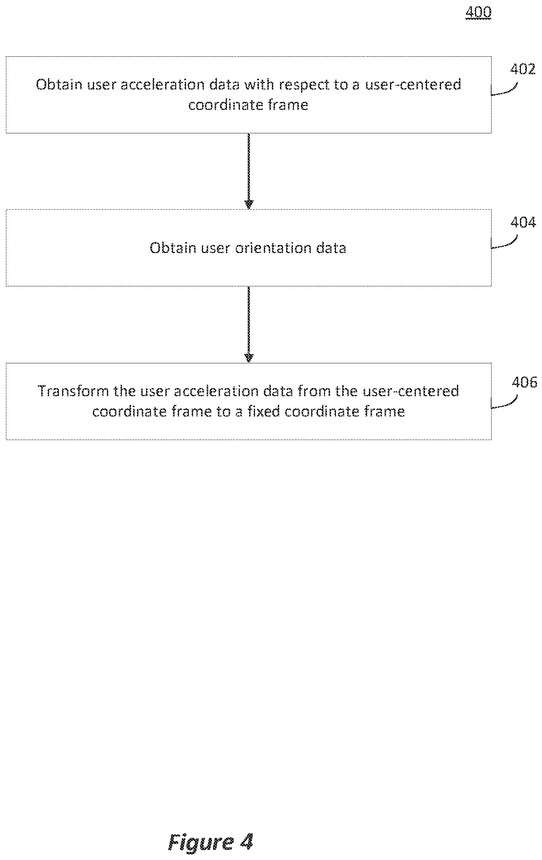

In some implementations, a movement direction associated with a user's movement activity may be determined using user acceleration data. The acceleration data may be obtained using one or more accelerometers, e.g., disposed in or on a device carried by or worn by the user. For example, the one or more accelerometers may be associated with a mobile phone in a pocket of the user, disposed in or on a wearable device worn by the user (e.g., headphones, ear buds, smart glasses, a heads-up display, a smart watch, a mobile phone worn in an arm band or waist band, or the like), etc. In some implementations, the user acceleration data may be utilized in connection with user head orientation information, as will be described below in connection with Figure 4. In some implementations, the user acceleration data may be used to determine a movement period associated with the user's movement activity. The movement period may indicate a time duration between two sequential movements associated with the movement activity, such as two sequential steps associated with a walking or running activity. The movement period may then be utilized to determine the movement direction. For example, the movement direction may be determined based on a direction of acceleration orthogonal to the movement direction in which at least a portion of the user acceleration data is anti-periodic over a period of time corresponding to the movement period. In some implementations, a signal or portion of data may be considered anti-periodic if the cross-correlation of the signal or portion of data with a version of the signal or portion of data delayed by the movement period is negative. Additionally or alternatively, in some implementations, a signal or portion of data may be considered anti-periodic if the signal or portion of data includes a local maximum and a local minimum occurring after a subsequent time interval corresponding with the movement activity.

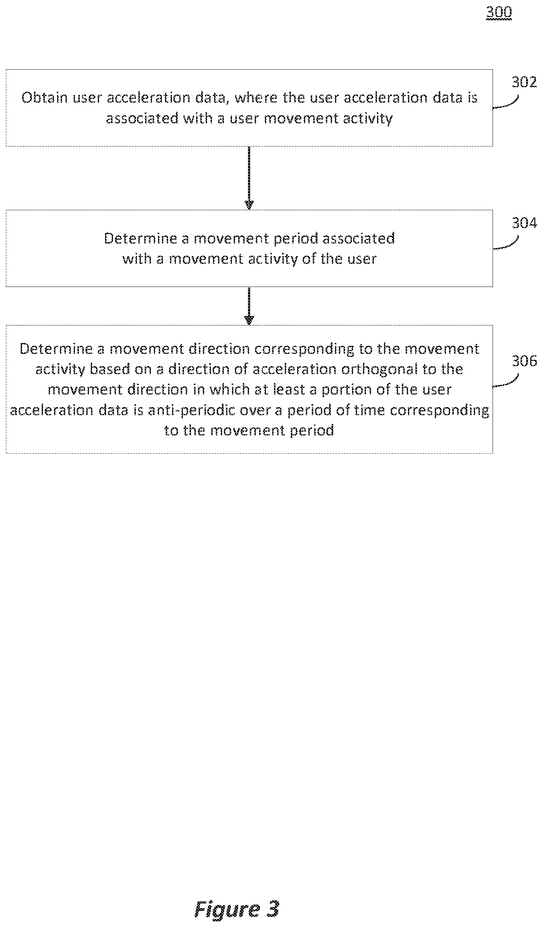

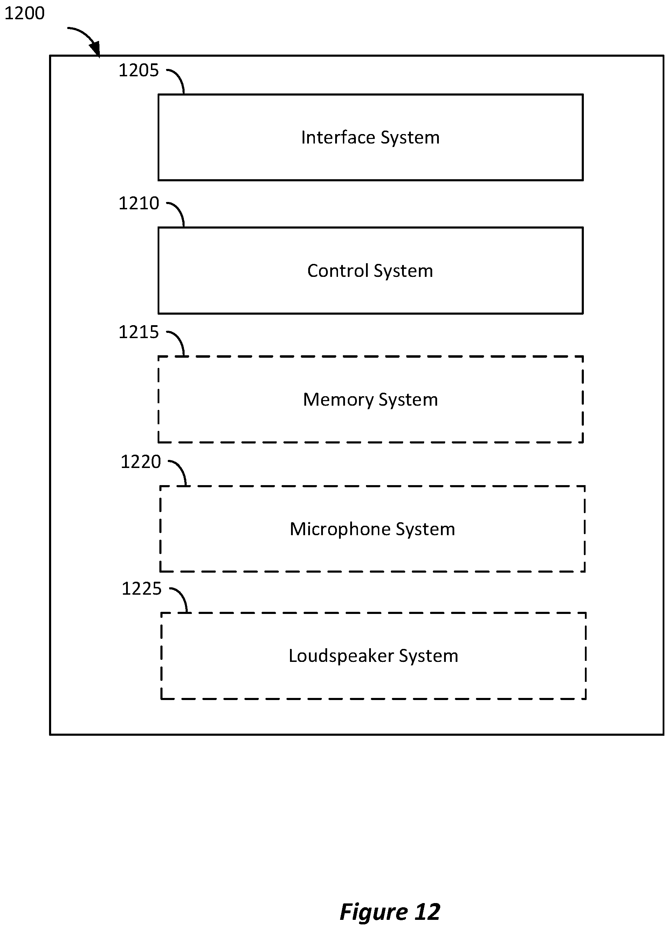

Figure 3 is a flowchart of an example process 300 for determining a movement direction associated with a movement activity of a user. In some implementations, blocks of process 300 may be executed by a control system or processor, such as the control system shown in and described below in connection with Figure 12. In some embodiments, blocks of process 300 may be executed in an order other than what is shown in Figure 3. In some implementations, two or more blocks of process 300 may be executed substantially in parallel. In some implementations, one or more blocks of process 300 may be omitted.

Process 300 can begin at 302 by obtaining user acceleration data, where the user acceleration data is associated with a user movement activity. The movement activity may include any suitable type of activity that involves acceleration along at least one axis that is periodic as a function of time. Examples of movement activities include walking, running, or the like. The user acceleration data may be obtained from one or more accelerometers disposed in or on a device worn or carried by the user, such as a mobile phone, a wearable device (e.g., headphones, smart glasses, a heads-up display, AR/VR glasses, etc.), or the like. Note that, in some implementations, the user acceleration data may be processed prior to use. For example, in some embodiments, the user acceleration data may be transformed from a coordinate frame centered around the user's head or body to a fixed coordinate frame, as shown in and described below in connection with Figure 4.

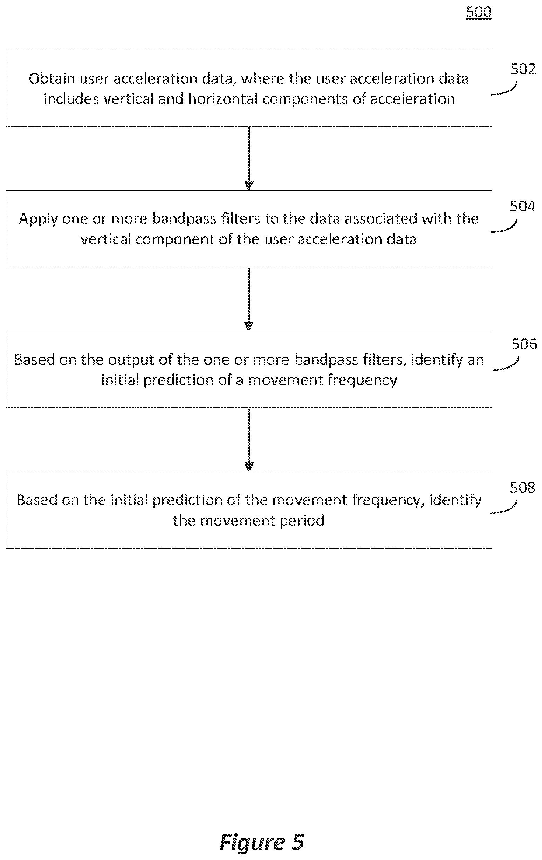

At 304, process 300 may determine a movement period associated with a movement activity of the user. The movement period may indicate a duration of time between sequential movements of the movement activity. For example, in an instance in which the movement activity is a walking or running activity, the movement period may indicate a period between sequential steps taken by the user during the walking or running activity. Example techniques for determining the movement period are shown in and described below in connection with Figure 5.

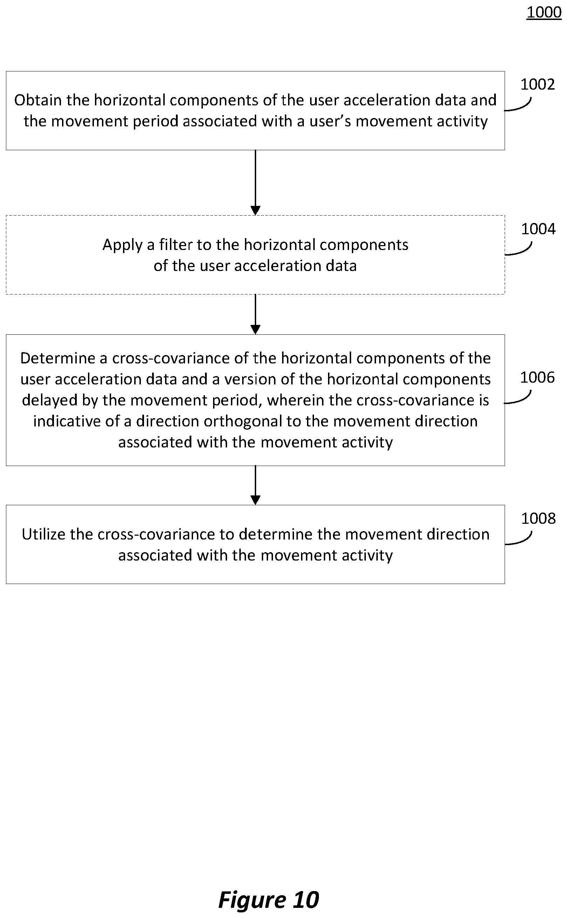

At 306, process 300 may determine a movement direction corresponding to the movement activity based on a direction of acceleration orthogonal to the movement direction in which at least a portion of the user acceleration data is anti-periodic over a period of time corresponding to the movement period. For example, the movement direction may be a direction orthogonal to the direction of acceleration orthogonal to the movement direction and which is closest to a looking direction of the user (e.g., where the looking direction is identified based at least in part on user head orientation data). Example techniques for determining the movement direction are shown in and described below in connection with Figure 10.

In some implementations, user acceleration data may be transformed from a user-centered coordinate frame to a fixed coordinate frame (e.g., fixed with respect to the external environment, ground, etc.). For example, the user acceleration data may be transformed from a coordinate frame centered with a user's head based on acceleration data and/or orientation data obtained from sensors disposed in or on a head-worn device (e.g., as shown in and described above in connection with Figure 1) to a fixed coordinate frame (e.g., as defined by the $X_F$, $Y_F$, and $Z_F$ axes shown in an described above in connection with Figure 1). This may effectively allow user acceleration data to be used to determine movement direction irrespective of an orientation of the user's head (e.g., if the user is looking around while moving). In some implementations, transformation of the user acceleration data from a user-centered coordinate frame to a fixed coordinate frame may be performed using user head orientation data. The head orientation data may be obtained from, e.g., one or more gyroscope and/or magnetometers disposed in or on a wearable device worn on the head of the user. For example, the one or more gyroscopes and/or magnetometers may be disposed in or on headphones, an AR/VR headset, smart glasses, etc.

Figure 4 is a flowchart of an example process 400 to transform user acceleration data from a user-centered coordinate frame to a fixed coordinate frame in accordance with some embodiments. In some implementations, blocks of process 400 may be executed by a control system or processor, such as the control system shown in and described below in connection with Figure 12. In some embodiments, blocks of process 400 may be executed in an order other than what is shown in Figure 4. In some implementations, two or more blocks of process 400 may be executed substantially in parallel. In some implementations, one or more blocks of process 400 may be omitted.

Process 400 can begin at 402 by obtaining user acceleration data with respect to a user-centered coordinate frame. The user-centered coordinate frame may be represented by the coordinate system ($X_U$, $Y_U$, $Z_U$). In some implementations, the user-centered coordinate frame may be aligned to the user's head such that, e.g., the $Z_U$ axis is directed upward out of the user's head, the $X_U$ axis is directed in a front-back direction with respect to the user's eyes, and the $Y_U$ axis is directed in a left-right direction with respect to the user's ears. In an instance in which the user acceleration data is measured in $Gs$ (e.g., equivalent to a measurement in $m/sec^2$ and scaled by $\frac{1}{9.8}$), the user acceleration data may be represented by, for a given sample $k$:

$$Acc_U(k) = \begin{pmatrix} AccX_U(k) \\ AccY_U(k) \\ AccZ_U(k) \end{pmatrix}$$

At 404, process 400 can obtain user orientation data. The user orientation data may be obtained from an orientation tracking device, which may be disposed in or on a wearable device worn on, e.g., the user's head. The user orientation data may be obtained using one or more gyroscopes and/or magnetometers (e.g., such as those disposed in or on orientation tracking device 103 of Figure 1). The user orientation data may indicate an orientation of the user's head with respect to the user-centered frame. The user orientation data may be represented by the matrix $M_{UF}(k)$, where elements of the matrix indicate user orientation data for a given sample time k with respect to axes of the user-centered coordinate frame. In some implementations $M_{UF}(k)$ may be a 3x3 matrix. It should be noted that orientation data may be specified in quaternions, Euler angles, and/or in any other suitable format.

At 406, process 400 can transform the user acceleration data from the user-centered coordinate frame to a fixed coordinate frame (e.g., as defined by the $X_F$, $Y_F$, and $Z_F$ axes shown in and described above in connection with Figure 1). The user acceleration data with respect to the fixed coordinate frame is generally represented herein as $Acc_F(k)$. The transformation from the user-centered coordinate frame to the fixed coordinate frame may be performed using the user orientation data obtained at block 404. For example, in some implementations, the product of the user orientation data and the user acceleration data with respect to the user-centered coordinate frame may correspond to the user acceleration data with respect to the fixed coordinate frame. As a more particular example, in some implementations, the user acceleration data with respect to the fixed coordinate frame may be determined by:

$$Acc_F(k) = \begin{pmatrix} AccX_F(k) \\ AccY_F(k) \\ AccZ_F(k) \end{pmatrix} = M_{UF}(k) \; x \; Acc_U(k)$$

As described above, in some implementations, the movement direction may be determined based at least in part on a movement period associated with a movement activity. For example, the movement direction may be determined based on a direction of acceleration orthogonal to the movement direction, where the orthogonal direction is a direction of acceleration for which at least a portion of acceleration data is anti-periodic over the movement period. In some implementations, the movement period may be determined by providing components of the user acceleration data (which may be the user acceleration data with respect to a fixed coordinate frame, as described above in connection with Figure 4) to one or more bandpass filters, each having a different center frequency. The output of the bandpass filters may then be used to determine an initial prediction of a movement frequency. For example, the initial prediction of the movement frequency may correspond to a center frequency of the bandpass filters that generates the largest amplitude output. The movement period may then be determined based on the initial prediction of the movement frequency. For example, the movement period may be determined as the time duration between two successive cycles of the output of the bandpass filter that generates the largest amplitude output. As a more particular example, the movement period may be determined as the time duration between successive zero crossings of the output of the bandpass filter that generates the largest amplitude output.

Figure 5 is a flowchart of an example process 500 for determining a movement period associated with a user activity in accordance with some embodiments. In some implementations, blocks of process 500 may be executed by a control system or processor, such as the control system or processor shown in and described below in connection with Figure 12. In some embodiments, blocks of process 500 may be executed in an order other than what is shown in Figure 5. In some implementations, two or more blocks of process 500 may be performed substantially in parallel. In some implementations, one or more blocks of process 500 may be omitted.

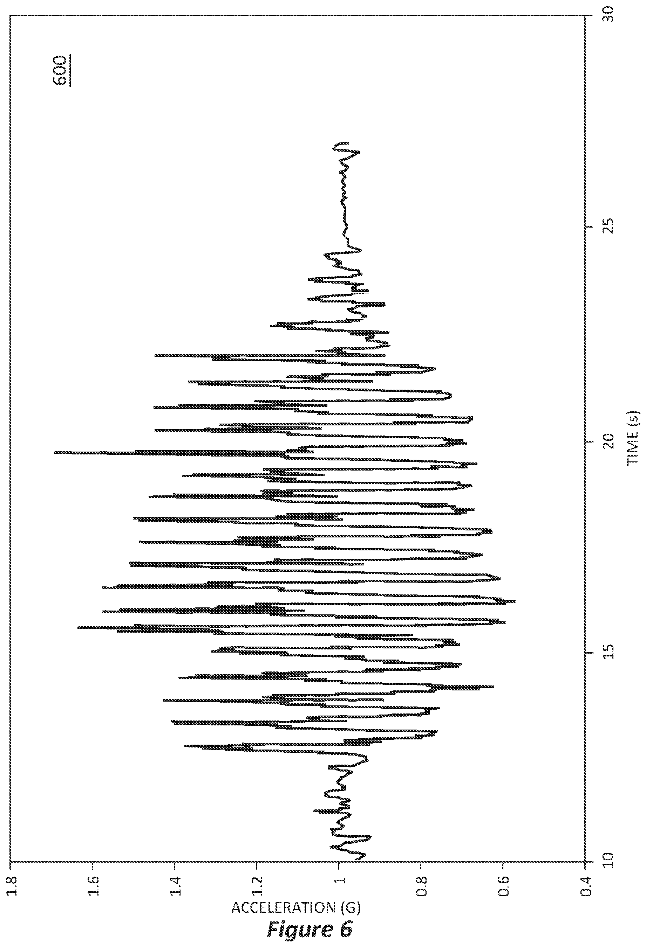

Process 500 can begin at 502 by obtaining user acceleration data, where the user acceleration data includes vertical and horizontal components of acceleration. For example, the vertical components of acceleration may correspond to acceleration data with respect to the Z axis, and the horizontal components of acceleration may correspond to acceleration data with respect to the X and Y axes. Figure 6 illustrates an example 600 of a vertical component of the user acceleration data obtained during a walking activity in accordance with some embodiments. Similar to what is described above in connection with Figures 3 and 4, the user acceleration data is obtained using one or more accelerometers disposed in or on a device worn or carried by the user. The user acceleration data may be with respect to a user-centered coordinate frame, or transformed to a fixed coordinate frame (e.g., as shown in and described above in connection with Figure 4).

At 504, process 500 can apply one or more bandpass filters to the acceleration data associated with the vertical

EP 4 453 509 B1

component of the user acceleration data. Any suitable number of bandpass filters may be used, such as one, two, five, ten, twenty, or the like. Each bandpass filter of the one or more bandpass filters may have a different center frequency. In some implementations, the center frequency may be within a range of about 1 Hz to 3 Hz. Examples of center frequencies include 1 Hz, 1.05 Hz, 1.2 Hz, 1.23 Hz, 1.5 Hz, 1.8 Hz, 1.89 Hz, 2 Hz, 2.34 Hz, 2.7 Hz, 2.89 Hz, 3 Hz, or the like. In instances in which two or more bandpass filters are used, the center frequencies of the two or more bandpass filters may be linearly distributed (e.g., separated by a fixed frequency difference) or not linearly distributed. In some implementations, gains may be different for bandpass filters having different center frequencies. For example, in some embodiments, gains may be relatively higher for a bandpass filter with a relatively lower center frequency than for a bandpass filter with a relatively higher center frequency.

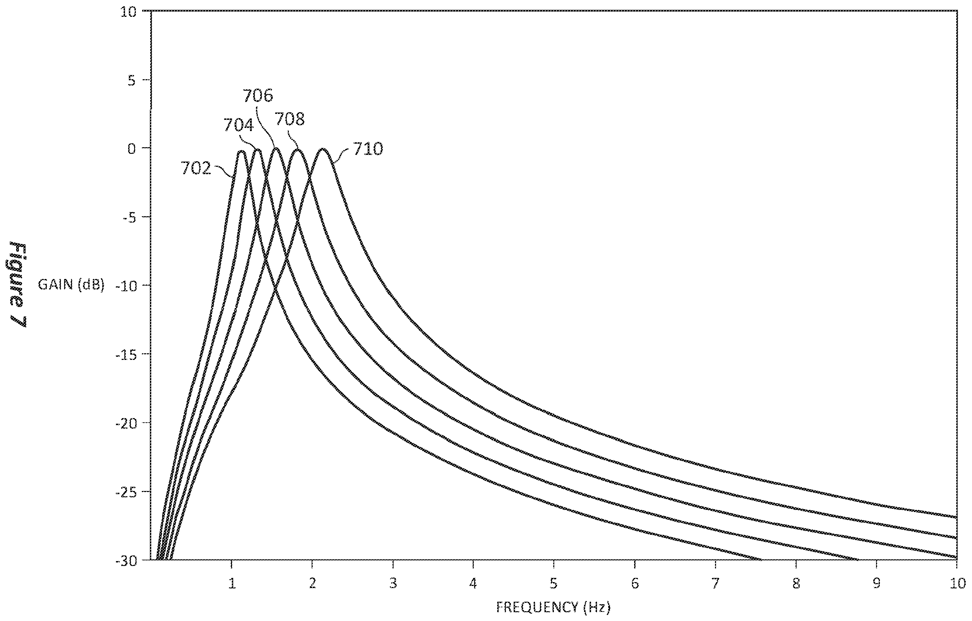

Turning to Figure 7, an example of five bandpass filters is shown in accordance with some embodiments. As illustrated, the five bandpass filters (702, 704, 706, 708, and 710) have center frequencies ranging between about 1.2 Hz and 2.2 Hz. In particular, the five bandpass filters shown in Figure 7 have center frequencies of 1.2 Hz, 1.4 Hz, 1.62 Hz, 1.89 Hz, and 2.2 Hz, respectively.

Referring back to Figure 5, at 506, process 500 can identify an initial prediction of a movement frequency based on the output of the one or more bandpass filters. Note that a movement frequency may be considered the inverse of the movement period. Accordingly, the initial prediction of the movement frequency may be considered the inverse of an initial prediction of the movement period. In some implementations, process 500 can identify the initial prediction of the movement frequency as the center frequency associated with the bandpass filter with the highest amplitude output.

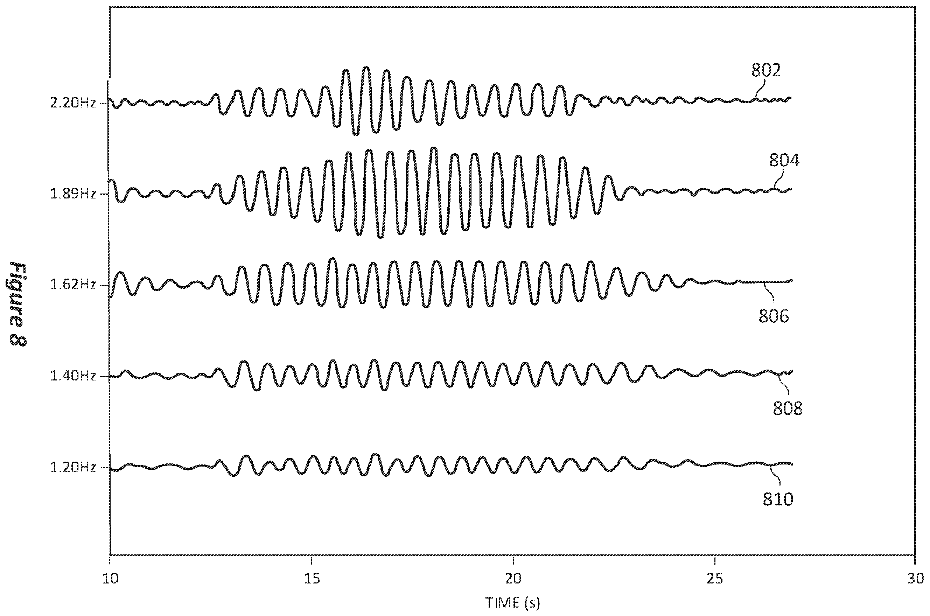

Turning to Figure 8, outputs of the five bandpass filters depicted in Figure 7 are illustrated in accordance with some embodiments. The outputs (802, 804, 806, 808, and 810) are generated responsive to provision of the vertical component of the user acceleration data depicted in Figure 6 being provided to each bandpass filter. Note that the output 804 of the bandpass filter with a center frequency of 1.89 Hz generates the largest amplitude output. Accordingly, in the specific example of the user acceleration data depicted in Figure 6 and the bandpass filters depicted in Figure 7, 1.89 Hz may be considered the initial prediction of the movement frequency.

Referring back to Figure 5, it should be noted that, in some cases, for a given vertical component of acceleration data, the outputs of two bandpass frequencies, one having a center frequency that is an integer multiple of the other, may generate outputs of similar magnitude. By way of example, in an instance in which a movement frequency is 1.2 Hz, bandpass filters having center frequencies of 1.2 Hz and 2.4 Hz may generate similar outputs. In some implementations, process 500 may identify the movement frequency based on the outputs of the one or more bandpass filters and with a bias toward lower center frequencies. For example, referring to the example given above of a movement frequency of 1.2 Hz, process 500 may select the initial prediction of the movement frequency as being 1.2 Hz rather than 2.4 Hz due to 1.2 Hz being lower than 2.4 Hz.

It should be noted that, in some implementations, process 500 may be configured to determine whether a movement activity that includes periodic movements is occurring based on the output of the one or more bandpass filters. For example, process 500 may determine that a movement activity that includes periodic movements is occurring responsive to the amplitude of at least one bandpass filter exceeding a predetermined threshold. Note that, in some embodiments, responsive to determining that no movement activity with periodic movements is occurring, process 500 may terminate. Additionally, in some embodiments, a movement direction may not be determined.

At 508, process 500 can identify the movement period based on the initial prediction of the movement frequency. In some implementations, process 500 may identify the movement period as the time duration between cycles of the output of the bandpass filter associated with the movement frequency (e.g., the bandpass filter that generates the highest amplitude output). In other words, the determination of the movement period may be considered a refinement of the initial prediction of the movement frequency.

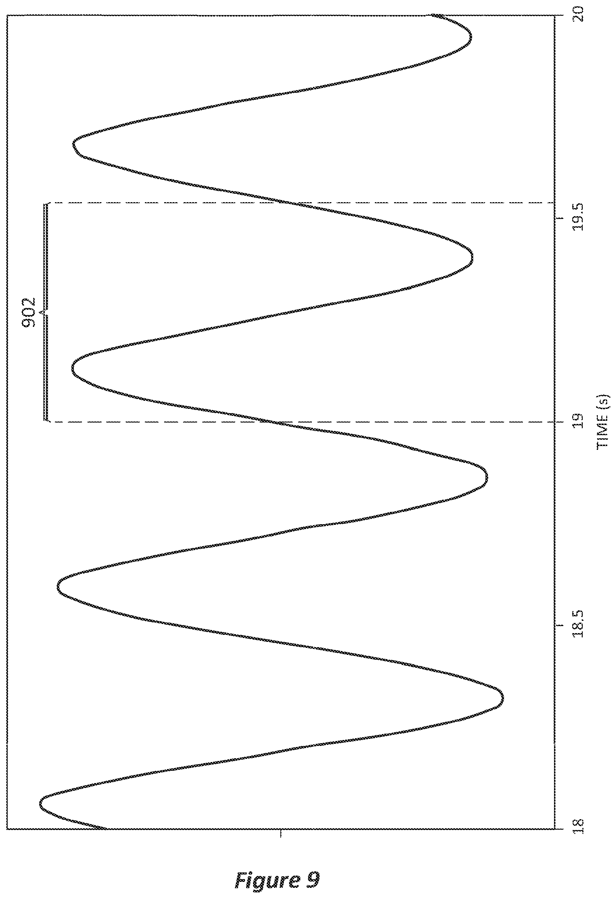

Turning to Figure 9, a zoomed in view of the output of the bandpass filter with a center frequency of 1.89 Hz from Figure 8 is shown. Recall that, as shown in and described above in connection with Figure 8, the bandpass filter with a center frequency of 1.89 Hz generated the largest amplitude output. As illustrated, the movement period 902 may be considered the time between successive cycles of the bandpass filter output. More particularly, as illustrated in Figure 9, the movement period may be the time between successive zero crossings of the filter output. In the example shown in Figure 9, the movement period 902 (e.g., the time between successive zero crossings) is 0.549 seconds. Note that the movement period of 0.549 seconds corresponds to a movement frequency of 1.82 Hz, which is relatively close to the initial prediction of the movement frequency of 1.89 Hz.

As described above, in some implementations, the movement direction may be determined based on a direction of acceleration orthogonal to the movement direction, where the direction of acceleration orthogonal to the movement direction has components of the acceleration data that are anti-periodic with respect to the movement period. According to the invention, the components of the acceleration data that are anti-periodic comprise the horizontal components of acceleration (which may include acceleration data with respect to the X and Y axes). According to the invention, the movement direction is determined by determining a cross-covariance of the components of acceleration that are anti-periodic with respect to the movement period and the components of acceleration that are anti-periodic delayed by the movement period. The movement direction is then determined based on the cross-covariance. In some embodiments, the cross-covariance may be used to determine an angle (generally referred to herein as "$\beta$") that is twice the angle associated with the movement direction (generally referred to herein as "$\alpha_{move}$"). In some implementations, the movement direction may then be determined by halving the value of $\beta$ and then selecting $\alpha_{move}$ as the angle that is half the value of $\beta$ and closest to the head orientation direction in order to disambiguate between $\frac{\beta}{2}$ and the angle $\pi$ radians away from $\frac{\beta}{2}$.

Figure 10 is a flowchart of an example process 1000 for determining movement direction based on user acceleration data and a movement period. In some implementations, blocks of process 1000 may be executed by a control system or a processor, such as the control system shown in and described below in connection with Figure 12. In some embodiments, blocks of process 1000 may be executed in an order other than what is shown in Figure 10. In some implementations, two or more blocks of process 1000 may be executed substantially in parallel. In some implementations, one or more blocks of process 1000 may be omitted.

Process 1000 can begin at 1002 by obtaining the horizontal components of the user acceleration data and the movement period associated with a user's movement activity. The movement period may be obtained based on acceleration data associated with the vertical component, as shown in and described above in connection with Figure 5. The horizontal component of user acceleration data may be represented according to the two-dimensional basis formed by the X and Y axes. In other words, in some embodiments, the horizontal component of the user acceleration data may correspond to user acceleration data with respect to the X and Y axes in aggregate. In an instance in which the user acceleration data has been transformed to the fixed frame coordinate system (e.g., as shown in and described above in connection with Figure 4), the horizontal component of the user acceleration data (generally represented herein as $Acc_H$) may be represented, for a given sample $k$, by:

$$AccH(k) = \begin{pmatrix} AccX_F(k) \\ AccY_F(k) \end{pmatrix}$$

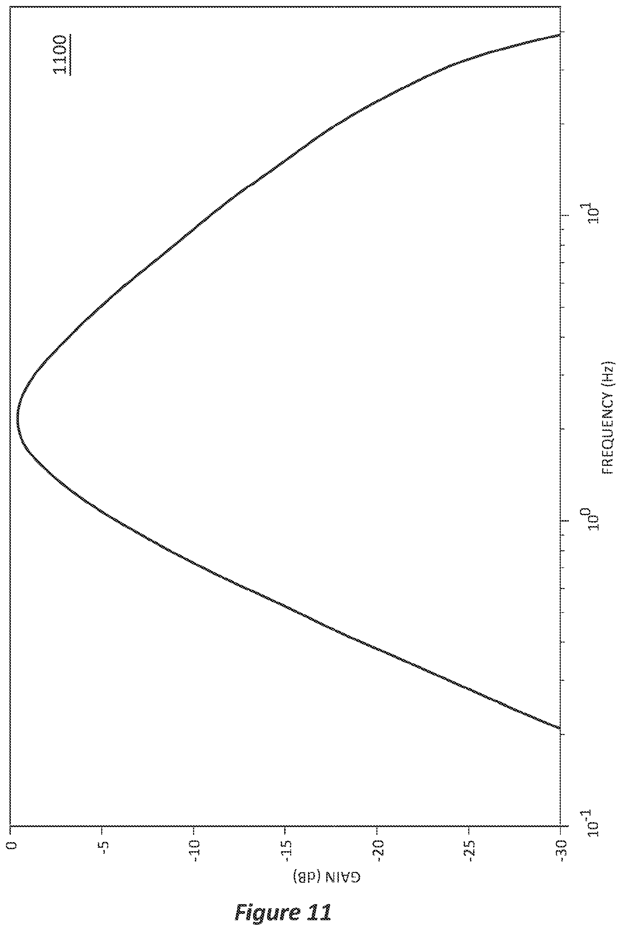

At 1004, process 1000 can optionally apply a filter to the horizontal components of the user acceleration data. For example, the filter may be a bandpass filter that effectively removes low-frequency acceleration components and attenuates high-frequency components. As a more particular example, the bandpass filter may be configured to attenuate low-frequency components below about 0.5 Hz, below about 1 Hz, below about 5 Hz, or the like. Additionally or alternatively, the bandpass filter may be configured to attenuate high-frequency components above about 8 Hz, above about 10 Hz, above about 20 Hz, or the like. An example 1100 of such a filter is shown in Figure 11. The filter illustrated in Figure 11 is constructed as a combination of a 2nd-order Butterworth high-pass filter with a cutoff frequency of 2 Hz, and a 1st-order Butterworth low-pass filter with a cutoff frequency of 1 Hz and an added gain of 3.0. It should be noted, however, that a suitable bandpass filter may be constructed in any suitable manner.

Referring back to Figure 10, at 1006, process 1000 can determine a cross-covariance of the horizontal components of the user acceleration data and a version of the horizontal components delayed by the movement period. The cross-covariance may be indicative of a direction orthogonal to the movement direction associated with the movement activity. In some implementations, the delay of the horizontal components of the user acceleration data may be implemented by shifting sample $k$ of the user acceleration data by a value $p$, where $p$ represents the number of sample intervals associated with the determined movement period. For example, for each time sample $k$, an outer-product vector may be formed from the X and Y acceleration components at the sample time and the X and Y acceleration components at a prior time delayed from the sample time by the movement period. By way of example, the product vector may be determined by:

$$C(k) = \begin{pmatrix} AccH(k)_1 AccH(k-p)_1 - AccH(k)_2 AccH(k-p)_2 \\ AccH(k)_1 AccH(k-p)_2 + AccH(k)_2 AccH(k-p)_1 \end{pmatrix}$$

Note that, in the equation above, the subscripts indicate extraction of elements of the $AccH$ vector. For example, a subscript of "1" indicates extraction of the element of the $AccH$ vector associated with the X axis, and a subscript of "2" indicates extraction of the element of the $AccH$ vector associated with the Y axis.

After determination of the product vector $C(k)$, process 1000 may determine the delay-offset cross-covariance vector, generally represented herein as $X(k)$, using the current and recent past product vectors. In some implementations, more recent out-product vectors (e.g., more recent values of the vector $C(k)$) may be weighted more heavily using a weight w(j). For example, the cross-covariance vector may be determined by:

$$X(k) = \sum_{j=0}^{\infty} w(j) \, x \, C(k-j)$$

In the equation above, the weights w(j) may be selected to be higher for more-recent out-product vectors of vector C. For example, the weights w(j) may be relatively higher for lower values of *j*. In one example, the weights w(j) may be determined using an exponential function such that the value of the weight decays as a function of time or sample number. By way of example, w(j) may be determined by:

$$w(j) = \exp\left(\frac{-j}{\tau f_s}\right)$$

In the instance in which an exponential function is used to determine the weights w(j), the cross-covariance vector X(k) may be determined in an iterative manner. For example, utilizing the example exponential function given above, X(k) may be determined by:

$$X(k) = X(k-1) \times \exp\left(\frac{-1}{\tau f_s}\right) + C(k)$$

At 1008, process 1000 may utilize the cross-covariance to determine the movement direction associated with the movement activity. For example, in some implementations, process 1000 may determine an angle that is twice the angle of the movement direction based on the cross-covariance vector $X(k)$. For example, in some implementations, the angle that is twice the angle of the movement direction, generally represented herein as $\beta$, may be determined by:

$$\beta = atan2(X(k)_1, X(k)_2)$$

Similar to what is described above, in the equation above, the subscript index represents the element extracted from the cross-covariance vector $X(k)$.

In some implementations, given the angle $\beta$, process 1000 may determine the movement direction, generally represented herein as $\alpha_{move}$, by dividing the angle $\beta$ by 2. Given that this may lead to an ambiguity of the direction of $\alpha_{move}$ as either pointing in front of the user or pointing behind the user, $\alpha_{move}$ may be selected as the angle that is half the value of $\beta$ that is closest to the vector associated with the head orientation direction of the user. Note that, as described above in connection with Figure 4, the head orientation direction may be determined by an orientation tracking device (e.g., using one or more gyroscopes and/or magnetometers).

Alternatively, in some implementations, the value of $\beta$ may be modified based on the head orientation direction (generally referred to, for a given sample *k*, as $\alpha_{look}(k)$). For example, the modified value of $\beta$, generally referred to herein as $\beta_{diff}$, may be determined by:

$$\beta_{diff}(k) = 2\alpha_{look}(k) - \beta(k)$$

The modified value of $\beta$ may then be used to determine $\alpha_{walk}$. For example, $\alpha_{move}$ may be determined by:

$$\alpha_{move}(k) = \frac{\beta_{diff}(k) - 2\pi \, x \, round(\frac{\beta_{diff}(k)}{2\pi})}{2}$$

In the equation given above, "round" represents a rounding to a nearest integer operation.

Figure 12 is a block diagram that shows examples of components of an apparatus capable of implementing various aspects of this disclosure. As with other figures provided herein, the types and numbers of elements shown in Figure 12 are merely provided by way of example. Other implementations may include more, fewer and/or different types and numbers of elements. According to some examples, the apparatus 1200 may be configured for performing at least some of the methods disclosed herein. In some implementations, the apparatus 1200 may be, or may include, a television, one or more components of an audio system, a mobile device (such as a cellular telephone), a laptop computer, a tablet device, a smart speaker, or another type of device.

According to some alternative implementations the apparatus 1200 may be, or may include, a server. In some such examples, the apparatus 1200 may be, or may include, an encoder. Accordingly, in some instances the apparatus 1200 may be a device that is configured for use within an audio environment, such as a home audio environment, whereas in other instances the apparatus 1200 may be a device that is configured for use in "the cloud," e.g., a server.

In this example, the apparatus 1200 includes an interface system 1205 and a control system 1210. The interface system 1205 may, in some implementations, be configured for communication with one or more other devices of an audio environment. The audio environment may, in some examples, be a home audio environment. In other examples, the audio environment may be another type of environment, such as an office environment, an automobile environment, a train environment, a street or sidewalk environment, a park environment, etc. The interface system 1205 may, in some implementations, be configured for exchanging control information and associated data with audio devices of the audio environment. The control information and associated data may, in some examples, pertain to one or more software applications that the apparatus 1200 is executing.

The interface system 1205 may, in some implementations, be configured for receiving, or for providing, a content stream. The content stream may include audio data. The audio data may include, but may not be limited to, audio signals. In some instances, the audio data may include spatial data, such as channel data and/or spatial metadata. In some examples, the content stream may include video data and audio data corresponding to the video data.

The interface system 1205 may include one or more network interfaces and/or one or more external device interfaces (such as one or more universal serial bus (USB) interfaces). According to some implementations, the interface system 1205 may include one or more wireless interfaces. The interface system 1205 may include one or more devices for implementing a user interface, such as one or more microphones, one or more speakers, a display system, a touch sensor system and/or a gesture sensor system. In some examples, the interface system 1205 may include one or more interfaces between the control system 1210 and a memory system, such as the optional memory system 1215 shown in Figure 12. However, the control system 1210 may include a memory system in some instances. The interface system 1205 may, in some implementations, be configured for receiving input from one or more microphones in an environment.

The control system 1210 may, for example, include a general purpose single- or multi-chip processor, a digital signal processor (DSP), an application specific integrated circuit (ASIC), a field programmable gate array (FPGA) or other programmable logic device, discrete gate or transistor logic, and/or discrete hardware components.

In some implementations, the control system 1210 may reside in more than one device. For example, in some implementations a portion of the control system 1210 may reside in a device within one of the environments depicted herein and another portion of the control system 1210 may reside in a device that is outside the environment, such as a server, a mobile device (e.g., a smartphone or a tablet computer), etc. In other examples, a portion of the control system 1210 may reside in a device within one environment and another portion of the control system 1210 may reside in one or more other devices of the environment. For example, a portion of the control system 1210 may reside in a device that is implementing a cloud-based service, such as a server, and another portion of the control system 1210 may reside in another device that is implementing the cloud-based service, such as another server, a memory device, etc. The interface system 1205 also may, in some examples, reside in more than one device.

In some implementations, the control system 1210 may be configured for performing, at least in part, the methods disclosed herein. According to some examples, the control system 1210 may be configured for implementing methods of determining a movement direction, determining a movement direction based on a direction orthogonal to the movement direction, or the like.

Some or all of the methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. The one or more non-transitory media may, for example, reside in the optional memory system 1215 shown in Figure 12 and/or in the control system 1210. Accordingly, various innovative aspects of the subject matter described in this disclosure can be implemented in one or more non-transitory media having software stored thereon. The software may, for example, include instructions for determining a movement direction, determining a movement direction based on a direction orthogonal to the movement direction, etc. The software may, for example, be executable by one or more components of a control system such as the control system 1210 of Figure 12.

In some examples, the apparatus 1200 may include the optional microphone system 1220 shown in Figure 12. The optional microphone system 1220 may include one or more microphones. In some implementations, one or more of the microphones may be part of, or associated with, another device, such as a speaker of the speaker system, a smart audio device, etc. In some examples, the apparatus 1200 may not include a microphone system 1220. However, in some such implementations the apparatus 1200 may nonetheless be configured to receive microphone data for one or more microphones in an audio environment via the interface system 710. In some such implementations, a cloud-based implementation of the apparatus 1200 may be configured to receive microphone data, or a noise metric corresponding at least in part to the microphone data, from one or more microphones in an audio environment via the interface system 1210.

According to some implementations, the apparatus 1200 may include the optional loudspeaker system 1225 shown in Figure 12. The optional loudspeaker system 1225 may include one or more loudspeakers, which also may be referred to herein as "speakers" or, more generally, as "audio reproduction transducers." In some examples (e.g., cloud-based implementations), the apparatus 1200 may not include a loudspeaker system 1225. In some implementations, the apparatus 1200 may include headphones. Headphones may be connected or coupled to the apparatus 1200 via a headphone jack or via a wireless connection (e.g., BLUETOOTH).

Some aspects of present disclosure include a system or device configured (e.g., programmed) to perform one or more examples of the disclosed methods, and a tangible computer readable medium (e.g., a disc) which stores code for implementing one or more examples of the disclosed methods or steps thereof. For example, some disclosed systems can be or include a programmable general purpose processor, digital signal processor, or microprocessor, programmed with software or firmware and/or otherwise configured to perform any of a variety of operations on data, including an embodiment of disclosed methods or steps thereof. Such a general purpose processor may be or include a computer system including an input device, a memory, and a processing subsystem that is programmed (and/or otherwise configured) to perform one or more examples of the disclosed methods (or steps thereof) in response to data asserted thereto.

Some embodiments may be implemented as a configurable (e.g., programmable) digital signal processor (DSP) that is configured (e.g., programmed and otherwise configured) to perform required processing on audio signal(s), including performance of one or more examples of the disclosed methods. Alternatively, embodiments of the disclosed systems (or elements thereof) may be implemented as a general purpose processor (e.g., a personal computer (PC) or other computer system or microprocessor, which may include an input device and a memory) which is programmed with software or firmware and/or otherwise configured to perform any of a variety of operations including one or more examples of the disclosed methods. Alternatively, elements of some embodiments of the inventive system are implemented as a general purpose processor or DSP configured (e.g., programmed) to perform one or more examples of the disclosed methods, and the system also includes other elements (e.g., one or more loudspeakers and/or one or more microphones). A general purpose processor configured to perform one or more examples of the disclosed methods may be coupled to an input device (e.g., a mouse and/or a keyboard), a memory, and a display device.

Another aspect of present disclosure is a computer readable medium (for example, a disc or other tangible storage medium) which stores code for performing (e.g., coder executable to perform) one or more examples of the disclosed methods or steps thereof.

While specific embodiments of the present disclosure and applications of the disclosure have been described herein, it will be apparent to those of ordinary skill in the art that many variations on the embodiments and applications described herein are possible. It should be understood that while certain forms of the disclosure have been shown and described, the disclosure is not to be limited to the specific embodiments described and shown or the specific methods described.

**Claims**

**1.**   A method for rendering audio content on a device worn on a head of a user, the method comprising:

  obtaining, using a control system, user acceleration data associated with the user from one or more accelerometers disposed in or on the device (302);
  determining, using the control system, a movement period associated with a physical movement activity of the user using data associated with a vertical component of the user acceleration data, wherein the movement period indicates a duration between two sequential movements by the user (304);
  determining, using the control system, a movement direction corresponding to the movement activity based on user acceleration data which is anti-periodic over a period of time corresponding to the movement period (306); a portion of said user acceleration data that is anti-periodic comprising one or more horizontal components of the user acceleration data; and
  rendering audio content to be presented on the device based on the determined movement direction,
  wherein determining the movement direction corresponding to the physical movement activity based on user acceleration data which is anti-periodic over the period of time corresponding to the movement period comprises determining a cross-covariance vector corresponding to the data associated with one or more horizontal components of the user acceleration data with a version of the data associated with the one or more horizontal components of the user acceleration data delayed by the movement period.

**2.**   The method of claim 1, wherein the movement activity comprises walking or running, and wherein the movement direction comprises a direction the user is walking or running.

3. The method of claim 1 or claim 2, further comprising transforming the user acceleration data from a user-centered coordinate frame to a fixed coordinate frame, to produce transformed user acceleration data, wherein the movement period is determined using the transformed user acceleration data.

4. The method of claim 3, wherein transforming the user acceleration data comprises using user head orientation data obtained from one or more gyroscopes disposed in or on the device , and optionally wherein the head orientation data is further used to determine the movement direction.

5. The method of any one of claims 1-4, wherein determining the movement period further comprises:

   providing the data associated with the vertical component of the user acceleration data to a plurality of narrowband filters, each narrowband filter of the plurality of narrowband filters associated with a different frequency; and
   generating a prediction of a movement frequency based on outputs of the plurality of narrowband filters, wherein the prediction of the movement frequency is used to determine the movement period.

6. The method of claim 5, wherein using the prediction of the movement frequency to determine the movement period comprises identifying a period of an output of a selected narrowband filter of the plurality of narrowband filters, wherein the selected narrowband filter of the plurality of narrowband filters generates a largest output signal.

7. The method of any one of claims 1-6, wherein the cross-covariance vector is determined by:

   determining, for each of a plurality of sample times, an outer-product vector from two or more horizontal components of the user acceleration data and two or more horizontal components of the user acceleration data delayed by the movement period, wherein the sample times correspond to times at which acceleration data associated with the user is sampled from the one or more accelerometers; and
   combining two or more of the outer-product vectors from two or more of the plurality of sample times to determine the cross-covariance vector.

8. The method of claim 7, wherein the two or more of the outer-product vectors are combined using a weighting, and wherein outer-product vectors associated with more recent sample times are weighted more heavily than outer-product vectors associated with less recent sample times, and optionally
wherein the weighting comprises an exponential decay function.

9. The method of any one of claims 1-8, further comprising applying a bandpass filter to the one or more horizontal components of the user acceleration data prior to determining the cross-covariance vector.

10. The method of any one of claims 1-9, wherein the movement direction is determined by:

    determining an intermediate angle corresponding to twice an angle associated with the movement direction; and
    determining the angle associated with the movement direction based on the intermediate angle.

11. The method of claim 10, wherein determining the angle associated with the movement direction based on the intermediate angle comprises:

    halving the intermediate angle to determine a candidate movement direction;
    and
    selecting the angle associated with the movement direction as the candidate movement direction or 180 degrees from the candidate movement direction based on head orientation data.

12. The method of claim 11 when dependent on any of claims 4 to 11, wherein determining the angle associated with the movement direction based on the intermediate angle comprises:

    determining a difference between the intermediate angle and an angle associated with an orientation of the head of the user; and
    determining the angle associated with the movement direction based on the difference.

13. The method of any one of claims 1-12, wherein the audio content is rendered to have a spatial perception of being centered with the identified movement direction.

**14.** An apparatus comprising a control system (1210) configured for implementing the method of any one of claims 1-13, the apparatus further comprising a loudspeaker system or headphones or the control system being further configured for communicating with devices of an audio environment.

**15.** One or more non-transitory media having software stored thereon, the software including instructions for controlling one or more devices to perform the method of any one of claims 1-13.

**Patentansprüche**

**1.** Verfahren zur Wiedergabe von Audioinhalten auf einer Vorrichtung, die am Kopf eines Benutzers getragen wird, wobei das Verfahren Folgendes umfasst:

Erhalten, unter Verwendung eines Steuerungssystems, von Benutzerbeschleunigungsdaten, die dem Benutzer zugeordnet sind, von einem oder mehreren in oder an der Vorrichtung angeordneten Beschleunigungsmessern (302);
Bestimmen, unter Verwendung des Steuerungssystems, einer Bewegungsperiode, die einer physischen Bewegungsaktivität des Benutzers zugeordnet ist, und unter Verwendung von Daten, die einer vertikalen Komponente der Benutzerbeschleunigungsdaten zugeordnet sind, wobei die Bewegungsperiode eine Dauer zwischen zwei aufeinanderfolgenden Bewegungen des Benutzers angibt (304);
Bestimmen, unter Verwendung des Steuerungssystems, einer Bewegungsrichtung, die der Bewegungsaktivität entspricht, auf der Grundlage von Benutzerbeschleunigungsdaten, die über einen der Bewegungsperiode (306) entsprechenden Zeitraum antiperiodisch sind; eines Abschnitts dieser Benutzerbeschleunigungsdaten, der antiperiodisch ist und eine oder mehrere horizontale Komponenten der Benutzerbeschleunigungsdaten umfasst; und
Wiedergeben von Audioinhalten, die auf der Grundlage der ermittelten Bewegungsrichtung auf der Vorrichtung präsentiert werden sollen,
wobei Bestimmen der Bewegungsrichtung, die der physischen Bewegungsaktivität entspricht, auf der Grundlage von Benutzerbeschleunigungsdaten, die über den Zeitraum, der der Bewegungsperiode entspricht, antiperiodisch sind, Bestimmen eines Kreuzkovarianzvektors umfasst, der den Daten entspricht, die einer oder mehreren horizontalen Komponenten der Benutzerbeschleunigungsdaten zugeordnet sind, mit einer Version der Daten, die der einen oder den mehreren horizontalen Komponenten der Benutzerbeschleunigungsdaten zugeordnet sind, verzögert um die Bewegungsperiode.

**2.** Verfahren nach Anspruch 1, wobei die Bewegungsaktivität Gehen oder Laufen umfasst und wobei die Bewegungsrichtung eine Richtung umfasst, in die der Benutzer geht oder läuft.

**3.** Verfahren nach Anspruch 1 oder 2, weiter umfassend Umwandeln der Benutzerbeschleunigungsdaten von einem benutzerzentrierten Koordinatensystem in ein festes Koordinatensystem, um umgewandelte Benutzerbeschleunigungsdaten zu erzeugen, wobei die Bewegungsdauer unter Verwendung der umgewandelten Benutzerbeschleunigungsdaten bestimmt wird.

**4.** Verfahren nach Anspruch 3, wobei Umwandeln der Benutzerbeschleunigungsdaten Verwenden von Benutzerkopfausrichtungsdaten umfasst, die von einem oder mehreren in oder an der Vorrichtung angeordneten Gyroskopen erhalten werden, und wobei die Kopfausrichtungsdaten optional weiter zum Bestimmen der Bewegungsrichtung verwendet werden.

**5.** Verfahren nach einem der Ansprüche 1-4, wobei Bestimmen der Bewegungsperiode weiter Folgendes umfasst:

Bereitstellen der Daten, die der vertikalen Komponente der Benutzerbeschleunigungsdaten zugeordnet sind, an eine Vielzahl von Schmalbandfiltern, wobei jeder Schmalbandfilter der Vielzahl von Schmalbandfiltern einer anderen Frequenz zugeordnet ist; und
Erzeugen einer Vorhersage einer Bewegungsfrequenz auf der Grundlage der Ausgänge der Vielzahl von Schmalbandfiltern, wobei die Vorhersage der Bewegungsfrequenz verwendet wird, um die Bewegungsperiode zu bestimmen.

**6.** Verfahren nach Anspruch 5, wobei Verwenden der Vorhersage der Bewegungsfrequenz zum Bestimmen der Bewegungsperiode Identifizieren einer Periode einer Ausgabe eines ausgewählten Schmalbandfilters aus der Vielzahl von Schmalbandfiltern umfasst, wobei das ausgewählte Schmalbandfilter aus der Vielzahl von Schmalbandfiltern ein größtes Ausgangssignal erzeugt.

**7.** Verfahren nach einem der Ansprüche 1-6, wobei der Kreuzkovarianzvektor bestimmt wird durch:

Bestimmen, für jede einer Vielzahl von Abtastzeitpunkten, eines Vektors des Außenprodukts aus zwei oder mehr horizontalen Komponenten der Benutzerbeschleunigungsdaten und zwei oder mehr horizontalen Komponenten der um die Bewegungsperiode verzögerten Benutzerbeschleunigungsdaten für jeden von mehreren Abtastzeitpunkten, wobei die Abtastzeitpunkte den Zeitpunkten entsprechen, zu denen die dem Benutzer zugeordneten Beschleunigungsdaten von einem oder mehreren Beschleunigungsmessern abgetastet werden; und Kombinieren von zwei oder mehr der Vektoren des Außenprodukts aus zwei oder mehr der Vielzahl von Abtastzeitpunkten, um den Kreuzkovarianzvektor zu bestimmen.

**8.** Verfahren nach Anspruch 7, wobei die zwei oder mehr Vektoren des Außenprodukts unter Verwendung einer Gewichtung kombiniert werden und wobei Vektoren des Außenprodukts, die neueren Abtastzeitpunkten zugeordnet sind, stärker gewichtet werden als Vektoren des Außenprodukts, die weniger neuen Abtastzeitpunkten zugeordnet sind,

wobei die Gewichtung optional eine exponentielle Abklingfunktion umfasst.

**9.** Verfahren nach einem der Ansprüche 1-8, weiter umfassend Anwenden eines Bandpassfilters auf die eine oder mehrere horizontale Komponenten der Benutzerbeschleunigungsdaten vor dem Bestimmen des Kreuzkovarianzvektors.

**10.** Verfahren nach einem der Ansprüche 1-9, wobei die Bewegungsrichtung bestimmt wird durch:

Bestimmen eines Zwischenwinkels, der dem Doppelten eines der Bewegungsrichtung zugeordneten Winkels entspricht; und Bestimmen des Winkels, der der Bewegungsrichtung zugeordnet ist, auf Grundlage des Zwischenwinkels.

**11.** Verfahren nach Anspruch 10, wobei Bestimmen des mit der Bewegungsrichtung verbundenen Winkels auf der Grundlage des Zwischenwinkels Folgendes umfasst:

Halbierung des Zwischenwinkels zum Bestimmen einer möglichen Bewegungsrichtung; und Auswählen des Winkels, der mit der Bewegungsrichtung verbunden ist, als Kandidatenbewegungsrichtung oder 180 Grad von der Kandidatenbewegungsrichtung auf der Grundlage der Daten zur Kopforientierung.

**12.** Verfahren nach Anspruch 11, wenn es von einem der Ansprüche 4 bis 11 abhängt, wobei Bestimmen des mit der Bewegungsrichtung verbundenen Winkels auf der Grundlage des Zwischenwinkels Folgendes umfasst:

Bestimmen der Differenz zwischen dem Zwischenwinkel und einem Winkel, der der Kopfhaltung des Benutzers zugeordnet ist; und Bestimmen des Winkels, der der Bewegungsrichtung zugeordnet ist, auf der Grundlage der Differenz.

**13.** Verfahren nach einem der Ansprüche 1-12, wobei der Audioinhalt so wiedergegeben wird, dass er den Eindruck erweckt, räumlich zentriert in Richtung der identifizierten Bewegung zu sein.

**14.** Einrichtung, umfassend ein Steuerungssystem (1210), das zur Durchführung des Verfahrens nach einem der Ansprüche 1-13 konfiguriert ist, wobei die Einrichtung weiter ein Lautsprechersystem oder Kopfhörer umfasst oder das Steuerungssystem weiter zur Kommunikation mit Vorrichtungen einer Audioumgebung konfiguriert ist.

**15.** Ein oder mehrere nichtflüchtige Medien, die darauf gespeicherte Software aufweisen, wobei die Software Anweisungen zum Steuern einer oder mehrerer Vorrichtungen zur Durchführung des Verfahrens nach einem der Ansprüche 1-13 beinhaltet.

**Revendications**

1. Procédé de rendu de contenu audio sur un dispositif porté sur la tête d'un utilisateur, le procédé comprenant :

l'obtention, à l'aide d'un système de commande, de données d'accélération d'utilisateur associées à l'utilisateur à partir d'un ou plusieurs accéléromètres disposés dans ou sur le dispositif (302) ;

la détermination, à l'aide du système de commande, d'une période de mouvement associée à une activité de mouvement physique de l'utilisateur à l'aide de données associées à une composante verticale des données d'accélération d'utilisateur, dans lequel la période de mouvement indique une durée entre deux mouvements séquentiels de l'utilisateur (304) ;

la détermination, à l'aide du système de commande, d'une direction de mouvement correspondant à l'activité de mouvement sur la base de données d'accélération d'utilisateur qui sont anti-périodiques sur une période donnée correspondant à la période de mouvement (306) ; une partie desdites données d'accélération d'utilisateur qui sont anti-périodiques comprenant une ou plusieurs composantes horizontales des données d'accélération d'utilisateur ; et

le rendu de contenu audio à présenter sur le dispositif sur la base de la direction de mouvement déterminée, dans lequel la détermination de la direction de mouvement correspondant à l'activité de mouvement physique sur la base des données d'accélération d'utilisateur qui sont anti-périodiques sur la période donnée correspondant à la période de mouvement comprend la détermination d'un vecteur de covariance croisée correspondant aux données associées à une ou plusieurs composantes horizontales des données d'accélération d'utilisateur avec une version des données associées aux une ou plusieurs composantes horizontales des données d'accélération d'utilisateur retardée par la période de mouvement.

2. Procédé selon la revendication 1, dans lequel l'activité de mouvement comprend la marche ou la course et dans lequel la direction de mouvement comprend une direction dans laquelle l'utilisateur marche ou court.

3. Procédé selon la revendication 1 ou la revendication 2, comprenant en outre la transformation des données d'accélération d'utilisateur d'un repère centré sur l'utilisateur vers un repère fixe, pour produire des données d'accélération d'utilisateur transformées, dans lequel la période de mouvement est déterminée à l'aide des données d'accélération d'utilisateur transformées.

4. Procédé selon la revendication 3, dans lequel la transformation des données d'accélération d'utilisateur comprend l'utilisation de données d'orientation de tête d'utilisateur obtenues à partir d'un ou plusieurs gyroscopes disposés dans ou sur le dispositif et éventuellement dans lequel les données d'orientation de tête sont en outre utilisées pour déterminer la direction de mouvement.

5. Procédé selon l'une quelconque des revendications 1-4, dans lequel la détermination de la période de mouvement comprend en outre :

la fourniture des données associées à la composante verticale des données d'accélération d'utilisateur à une pluralité de filtres à bande étroite, chaque filtre à bande étroite de la pluralité de filtres à bande étroite étant associé à une fréquence différente ; et

la génération d'une prédiction d'une fréquence de mouvement sur la base de sorties de la pluralité de filtres à bande étroite, dans lequel la prédiction de la fréquence de mouvement est utilisée pour déterminer la période de mouvement.

6. Procédé selon la revendication 5, dans lequel l'utilisation de la prédiction de la fréquence de mouvement pour déterminer la période de mouvement comprend l'identification d'une période d'une sortie d'un filtre à bande étroite sélectionné de la pluralité de filtres à bande étroite, dans lequel le filtre à bande étroite sélectionné de la pluralité de filtres à bande étroite génère un signal de sortie maximal.

7. Procédé selon l'une quelconque des revendications 1-6, dans lequel le vecteur de covariance croisée est déterminé par :

la détermination, pour chacun d'une pluralité d'instants d'échantillonnage, d'un vecteur de produit extérieur à partir de deux composantes horizontales ou plus des données d'accélération d'utilisateur et de deux composantes horizontales ou plus des données d'accélération d'utilisateur retardées par la période de mouvement, dans lequel les instants d'échantillonnage correspondent à des instants auxquels des données d'accélération associées à l'utilisateur sont échantillonnées à partir des un ou plusieurs accéléromètres ; et
la combinaison de deux ou plus des vecteurs de produit extérieur provenant de deux ou plus de la pluralité d'instants d'échantillonnage pour déterminer le vecteur de covariance croisée.

8. Procédé selon la revendication 7, dans lequel deux vecteurs de produit extérieur ou plus sont combinés à l'aide d'une pondération et dans lequel des vecteurs de produit extérieur associés à des instants d'échantillonnage plus récents sont pondérés plus fortement que des vecteurs de produit extérieur associés à des instants d'échantillonnage moins récents et facultativement
dans lequel la pondération comprend une fonction de décroissance exponentielle.

9. Procédé selon l'une quelconque des revendications 1-8, comprenant en outre l'application d'un filtre passe-bande aux une ou plusieurs composantes horizontales des données d'accélération d'utilisateur avant la détermination du vecteur de covariance croisée.

10. Procédé selon l'une quelconque des revendications 1-9, dans lequel la direction de mouvement est déterminée par :

la détermination d'un angle intermédiaire correspondant à deux fois un angle associé à la direction de mouvement ; et
la détermination de l'angle associé à la direction de mouvement sur la base de l'angle intermédiaire.

11. Procédé selon la revendication 10, dans lequel la détermination de l'angle associé à la direction de mouvement sur la base de l'angle intermédiaire comprend :

la division par deux l'angle intermédiaire pour déterminer une direction de mouvement candidate ; et
la sélection de l'angle associé à la direction du mouvement comme direction de mouvement candidate ou à 180 degrés par rapport à la direction de mouvement candidate sur la base des données d'orientation de tête.

12. Procédé selon la revendication 11, lorsqu'il dépend de l'une quelconque des revendications 4 à 11, dans lequel la détermination de l'angle associé à la direction de mouvement sur la base de l'angle intermédiaire comprend :

la détermination d'une différence entre l'angle intermédiaire et un angle associé à une orientation de la tête de l'utilisateur ; et
la détermination de l'angle associé à la direction de mouvement sur la base de la différence.

13. Procédé selon l'une quelconque des revendications 1-12, dans lequel le contenu audio est rendu de manière à présenter une perception spatiale d'être centré sur la direction de mouvement identifiée.

14. Appareil comprenant un système de commande (1210) configuré pour mettre en œuvre le procédé de l'une quelconque des revendications 1-13, l'appareil comprenant en outre un système de haut-parleurs ou des écouteurs ou le système de commande étant en outre configuré pour communiquer avec des dispositifs d'un environnement audio.

15. Un ou plusieurs supports non transitoires sur lesquels est stocké un logiciel, le logiciel incluant des instructions pour commander un ou plusieurs dispositifs pour réaliser le procédé selon l'une quelconque des revendications 1-13.

Figure 1

Figure 2

300

Obtain user acceleration data, where the user acceleration data is
associated with a user movement activity

302

Determine a movement period associated
with a movement activity of the user

304

Determine a movement direction corresponding to the movement
activity based on a direction of acceleration orthogonal to the
movement direction in which at least a portion of the user
acceleration data is anti-periodic over a period of time corresponding
to the movement period

306

*Figure 3*

400

Obtain user acceleration data with respect to a user-centered coordinate frame

402

Obtain user orientation data

404

Transform the user acceleration data from the user-centered coordinate frame to a fixed coordinate frame

406

*Figure 4*

500

Obtain user acceleration data, where the user acceleration data includes vertical and horizontal components of acceleration

502

Apply one or more bandpass filters to the data associated with the vertical component of the user acceleration data

504

Based on the output of the one or more bandpass filters, identify an initial prediction of a movement frequency

506

Based on the initial prediction of the movement frequency, identify the movement period

508

*Figure 5*

*Figure 6*

Figure 7

*Figure 8*

Figure 9

1000

Obtain the horizontal components of the user acceleration data and the movement period associated with a user's movement activity

1002

Apply a filter to the horizontal components of the user acceleration data

1004

Determine a cross-covariance of the horizontal components of the user acceleration data and a version of the horizontal components delayed by the movement period, wherein the cross-covariance is indicative of a direction orthogonal to the movement direction associated with the movement activity

1006

Utilize the cross-covariance to determine the movement direction associated with the movement activity

1008

*Figure 10*

*Figure 11*

1200

1205

Interface System

1210

Control System

1215

Memory System

1220

Microphone System

1225

Loudspeaker System

*Figure 12*

**EP 4 453 509 B1**

**Patent documents cited in the description**

- US 63293444
- US 63376347
- US 2003191582 A1
- US 2015088408 A
- CN 113825055 A